# EUROPÄISCHE PATENTSCHRIFT

(11) **EP 1 717 082 B1**
(45) Veröffentlichungstag und Bekanntmachung des Hinweises auf die Patenterteilung: **06.10.2010**
(21) Anmeldenummer: 06008374.8
(22) Anmeldetag: 24.04.2006
(51) Int. Cl.: B60J 10/00

(54) **Dichtungsstrang mit Beschichtung**
Seal with surface coating
Joint d'étanchéité avec une couche de surface

(30) Priorität: 28.04.2005 DE 102005019735
(43) Veröffentlichungstag der Anmeldung: 02.11.2006
(73) Patentinhaber: SaarGummi technologies S.à.r.l., 5445 Schengen (LU)
(72) Erfinder: Welter, Patrick, 66687 Wadern-Büschfeld (DE)
(74) Vertreter: Bernhardt, Winfrid

(56) Entgegenhaltungen:
- EP-A1- 1 566 302
- WO-A-97/12775
- WO-A-2005/028231
- DE-A1- 3 145 861
- DE-A1- 19 644 463
- DE-A1- 19 834 688
- US-A- 4 442 156

## Beschreibung

Die Erfindung betrifft einen Dichtungsstrang, insbesondere zur Abdichtung von Fahrzeugtüren und Fenstern, wobei das Elastomermaterial des Dichtungsstrangs über den gesamten Strangumfang oder über einen Teil des Strangumfangs mit einer Beschichtung versehen ist, deren Oberfläche als solche eine Strukturierung aufweist.

Es ist bekannt, sichtbare Flächen z. B. zur Abdichtung von Fahrzeugtüren verwendeter Dichtungsstränge mit einer dekorativen Textilmateriallage zu überziehen. Die Herstellung eines solchen Überzugs ist arbeitsaufwendig. Entsprechend verteuert sich der Dichtungsstrang, dessen Einsatz daher hauptsächlich auf Fahrzeugen der Oberklasse beschränkt ist.

Ein Dichtungsstrang der eingangs erwähnten Art geht aus der gattungsgemäßen WO 2005/028231 A1 hervor. Die auf das Elastomermaterial des Dichtungsstrangs durch Koextrusion aufgebrachte strukturierte Beschichtung weist auf ihrer Oberfläche zum Teil durch das Extrusionswerkzeug zum Teil durch eine nachgeordnete Walze aufgebrachte Längs- und Querrillen auf. Die Rillen sorgen in Verbindung mit in der Beschichtung enthaltenen Mikrokapseln, die bei der Vulkanisation des Dichtungsstrangs teilweise aufplatzen, für eine Oberfläche, die an die Oberfläche eines Textilmaterials erinnert. Die Beschichtung ist mit einer Klarlackschicht überzogen.

Der Erfindung liegt die Aufgabe zugrunde, einen Dichtungsstrang mit einer dekorativen Sichtfläche zu schaffen, der sich mit geringerem Aufwand als dieser bekannten Dichtungsstrang herstellen lässt.

Der diese Aufgabe lösende Dichtungsstrang nach der Erfindung ist dadurch gekennzeichnet, dass auch die die Beschichtung tragende Dichtungsmaterialoberfläche eine Strukturierung aufweist.

Durch eine Beschichtung mit einer für sich strukturierten Oberfläche, bei der er sich um eine Lack-, Elastomer- oder/und Kunststoffbeschichtung handeln kann, lässt sich in Zusammenwirkung mit der erfindungsgemäßen Strukturierung der die Beschichtung tragenden Dichtungsmaterialoberfläche, eine besonders dekorative, z.B. an einen Textilmaterialüberzug erinnernde Sichtfläche erzeugen.

Eine besonders große Ähnlichkeit mit einem Textilmaterialüberzug lässt sich durch eine Narbung, eine Riffelung aus Längsriefen oder/und aus sich kreuzenden Längs- und Querriefen im Dichtungsmaterial in Verbindung mit einer rauhen Beschichtungsoberfläche erreichen.

Die Erfindung wird nachfolgend anhand von Ausführungsbeispielen und der beiliegend, sich auf diese Ausführungsbeispiele beziehenden Zeichnungen näher erläutert.

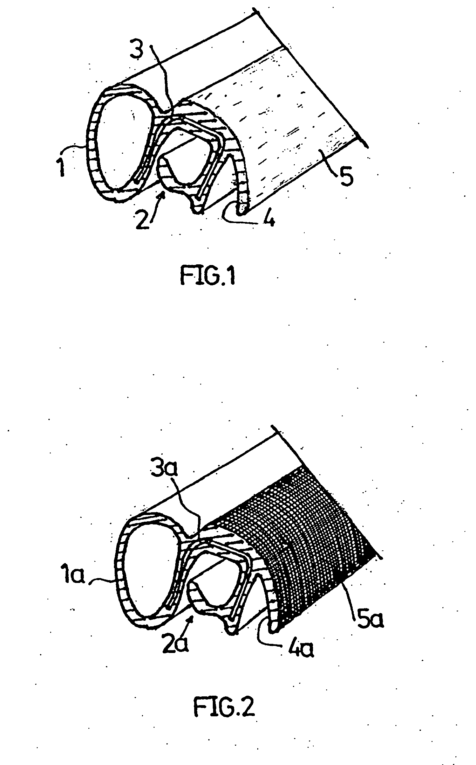

Fig. 1 und 2 zeigen verschiedene Dichtungsstränge nach der Erfindung.

Ein durch Extrudieren hergestellter Dichtungsstrang für eine Fahrzeugtür weist einen Dichtungsabschnitt 1 und einen Befestigungsabschnitt 2 auf. Letzterer dient zum Aufstecken des Dichtungsstrangs auf einen an der Fahrzeugkarosserie gebildeten Flansch. In den einstückig in den Dichtungsabschnitt 1 übergehenden Befestigungsabschnitt 2 ist eine metallische, im Querschnitt U-förmige Verstärkung 3 eingebettet. An den Befestigungsabschnitt 2 schließt sich ein weiterer, eine Lippe bildender Abschnitt 4 an, der mit dem Befestigungsabschnitt 2 einen im Querschnitt bogenförmigen Oberflächenabschnitt 5 des Dichtungsstrangs bildet.

Auf das Dichtungsmaterial des Oberflächenabschnitts 5 ist eine Lackbeschichtung aufgebracht. Z. B. durch in den Lack eingebettete Partikel bildet der Lack eine rauhe Oberfläche. Durch die rauhe Oberfläche wird der Eindruck erweckt, als sei der Oberflächenabschnitt 5 mit einer Lage aus einem samtartigen Textilmaterial überzogen.

Bei dem Ausführungsbeispiel von Fig. 2 weist die Oberfläche des Dichtungsmaterials eines Oberflächenabschnitts 5a der Strangdichtung zusätzlich zur Lackbeschichtung eine durch Längsriefen und diese kreuzende Querriefen gebildete Oberflöchenstrukturierung auf. Die matte Oberfläche der Lackbeschichtung erzeugt in Verbindung mit der Oberflächenstrukturierung der die Beschichtung tragenden Dichtungsmaterialoberfläche den Eindruck, als sei der Oberflächenabschnitt 5a mit einem gewebeartigen Textilmaterial überzogen.

Es versteht sich, dass simulierte Textilmaterialoberflächen in beliebigen Farben erzeugt werden können.

## Patentansprüche

1. Dichtungsstrang, insbesondere zur Abdichtung von Fahrzeugtüren oder Fenstern, wobei das Dichtungsmaterial über den gesamten Strangumfang oder über einen Teil (5) des Strangumfangs mit einer Beschichtung versehen ist, deren Oberfläche als solche eine Strukturierung aufweist,
**dadurch gekennzeichnet,**
**dass** auch die die Beschichtung tragende Dichtungsmaterioloberfläche mit einer Strukturierung versehen ist.

2. Dichtungsstrang nach Anspruch 1,
**dadurch gekennzeichnet,**
**dass** die Beschichtung eine Lackbeschichtung ist.

3. Dichtungsstrang nach Anspruch 1 oder 2,
**dadurch gekennzeichnet,**
**dass** die Beschichtung ein Elastomer oder/und einen Kunststoff aufweist.

4. Dichtungsstrang nach einem der Ansprüche 1 bis 3,
**dadurch gekennzeichnet,**
**dass** die Strukturierung der die Beschichtung tragenden Dichtungsmaterialoberfläche des Dichtungsstrangs zueinander parallele Längsriefen oder/und Querriefen aufweist.

5. Dichtungsstrang nach einem der Ansprüche 1 bis 4,
**dadurch gekennzeichnet,**
**dass** die Strukturierung der die Beschichtung tragenden Materialoberfläche eine Rändelung oder/und Narbung aufweist.

6. Dichtungsstrang nach einem der Ansprüche 1 bis 5,
**dadurch gekennzeichnet,**
**dass** die Oberfläche der Beschichtung rauh ist.

7. Dichtungsstrang nach einem der Ansprüche 1 bis 6,
**dadurch gekennzeichnet,**
**dass** durch die Strukturierung der Beschichtung und/oder der Dichtungsmaterialoberfläche eine Oberfläche gebildet ist, welche einer durch einen Textilmaterialüberzug gebildeten Oberfläche ähnlich ist.

## Claims

1. Sealing strip, particularly for sealing vehicle doors or windows, wherein the sealing material is provided over the entire strip circumference or over a part (5) of the strip circumference with a coating of which the surface as such has a structuring, **characterised in that** the sealing material surface carrying the coating is also provided with a structuring.

2. Sealing strip according to claim 1, **characterised in that** the coating is a paint coating.

3. Sealing strip according to claim 1 or 2, **characterised in that** the coating comprises an elastomer and/or a synthetic material.

4. Sealing strip according to any one of claims 1 to 3, **characterised in that** the structuring of the sealing material surface, which carries the coating, of the sealing strip has mutually parallel longitudinal scores and/or transverse scores.

5. Sealing strip according to any one of claims 1 to 4, **characterised in that** the structuring of the material surface carrying the coating has a knurling and/or graining.

6. Sealing strip according to any one of claims 1 to 5, **characterised in that** the surface of the coating is rough.

7. Sealing strip according to any one of claims 1 to 6, **characterised in that** a surface similar to a surface formed by a textile material overlay is formed by the structuring of the coating and/or of the sealing material surface.

## Revendications

1. Joint d'étanchéité, en particulier pour rendre étanche les portes de véhicule ou fenêtres, où le matériau d'étanchéité est pourvu sur tout le pourtour du joint ou sur une partie (5) du pourtour du joint d'un revêtement dont la surface en tant que telle présente une structuration, **caractérisé en ce qu'**aussi la surface du matériau d'étanchéité supportant le revêtement est pourvue d'une structuration.

2. Joint d'étanchéité selon la revendication 1, **caractérisé en ce que** le revêtement est une couche de laque.

3. Joint d'étanchéité selon la revendication 1 ou 2, **caractérisé en ce que** le revêtement présente un élastomère et/ou un matériau synthétique.

4. Joint d'étanchéité selon l'une des revendications 1 à 3, **caractérisé en ce que** la structuration de la surface de matériau d'étanchéité, portant le revêtement, du joint d'étanchéité présente des rainures longitudinales et/ou rainures transversales parallèles les unes aux autres.

5. Joint d'étanchéité selon l'une des revendications 1 à 4, **caractérisé en ce que** la structuration de la surface de matériau supportant le revêtement présente un moletage et/ou grainage.

6. Joint d'étanchéité selon l'une des revendications 1 à 5, **caractérisé en ce que** la surface du revêtement est rugueuse.

7. Joint d'étanchéité selon l'une des revendications 1 à 6, **caractérisé en ce que** par la structuration du revêtement et/ou de la surface du matériau d'étanchéité, une surface est formée qui ressemble à une surface formée par un revêtement en matière textile.
